Europäisches Patentamt

(19) European Patent Office

Office européen des brevets

(11) EP 0 753 849 A2

(12) **EUROPEAN PATENT APPLICATION**

(43) Date of publication:
15.01.1997 Bulletin 1997/03

(51) Int. Cl.$^6$: **G11B 20/10**

(21) Application number: 96304882.2

(22) Date of filing: 02.07.1996

(84) Designated Contracting States:
**DE FR GB**

(30) Priority: **10.07.1995 JP 195772/95**

(71) Applicant: **SONY CORPORATION**
**Tokyo (JP)**

(72) Inventors:
 • **Kanai, Takashi**
   **Shinagawa-ku, Tokyo (JP)**
 • **Inayama, Minoru**
   **Shinagawa-ku, Tokyo (JP)**
 • **Masuda, Toshihiko**
   **Shinagawa-ku, Tokyo (JP)**
 • **Toyoda, Takashi**
   **Shinagawa-ku, Tokyo (JP)**

(74) Representative: **Ayers, Martyn Lewis Stanley et al**
   **J.A. KEMP & CO.**
   **14 South Square**
   **Gray's Inn**
   **London WC1R 5LX (GB)**

(54) **Signal processing device**

(57) A signal processing device capable of eliminating the occurrence of re-quantization errors thereby improving the played-back audio. The signal processing device of the present invention comprises a digital filter (4) for allowing an inputted digital signal to pass through a prescribed frequency band and a digital/analog converter (5) for converting the output of the digital filter (4) into an analog signal and constructed such that the effective output bit length of the digital filter means (4) becomes equal to, or smaller than, the processing bit length of the analog converter whereby the process of making the output bit length of the digital filter means (4) small at the front stage of the digital/analog converter (5) is not necessitated and no re-quantization errors take place.

**FIG. 1**

## Description

The present invention relates to a signal processing device for performing processing on, for example, audio signals etc. in the form of digital data.

With, for example, various digital audio playback equipment such as compact disc (CD) players or DAT (Digital Audio Tape recorder) etc., when an audio signal read out from a disc as a digital signal is converted to an analog audio signal, if the digital audio signal is provided to a D/A converter without modification to obtain an analog signal, it is known that a baseband component present in an audio band component determined on the basis of the recording media sampling frequency is then added to this analog audio signal. It can then be understood that a so-called cyclic frequency component and a so-called mapping component for a baseband component can be expressed in a band of a frequency which is an integer number of times the sampling frequency.

If this kind of cyclic frequency component is left in the audio signal which is converted to an analog signal, it is possible that intermodulation distortion will occur at, for example, a power amplifier for amplifying an analog audio signal or a speaker for outputting the audio signal, with the audio signal then not being provided in an appropriate manner.

In reality, this kind of cyclic frequency component can be removed. In one well-known method, a digital filter having a low-pass band filter characteristic where baseband bands only are allowed to pass but cyclic frequency component bands are blocked is provided before the D/A converter.

The filter characteristics can then be improved by making the filter order large or making the bit-length of the coefficient set for a coefficient unit large so that the cyclic frequency component can be removed to as great an extent as possible at this digital filter.

The bit length of the digital audio signal outputted from the digital filter is determined by the bit length of the digital audio signal inputted to the digital filter and the coefficient bit length. Therefore, if the bit length of the digital filter coefficient is made large as described above, the bit length of the digital audio signal outputted from the digital filter also becomes large but there is sometimes a case in which the bit length of the output data of the digital filter becomes larger than the bit length of a following D/A converter.

In this case, a so-called "rounding-off" process of making the bit length of the output of the digital filter correspond to the bit length of the D/A converter is carried out at the input stage of the D/A converter in such a manner that for example, the lower-place bits of the output data of the digital filter are discarded.

However, the above-described method involves a problem that information for the original digital audio signal data is missing, resulting in the occurrence of re-quantization errors which is detrimental to the quality of the audio playback.

According to one example of the present invention, in a signal processing device provided with a digital filter for making an inputted digital signal pass through a prescribed frequency band and a digital/analog converter for converting an output of the digital filter to an analog signal, the effective output bit length of the digital filter is set up to be equal to or less than the processing bit length of the digital/analog convertor whereby a process known a "rounding off" where the bit length of the output of the digital filter is made small is no longer necessary at the stage preceding that digital/analog converter and re-quantization errors do not occur.

The signal processing device of the present invention is capable of improving the played-back audio in, for example, digital audio playback devices etc. by eliminating the occurrences of re-quantization errors. By way of example, the following description of an embodiment of the present invention is given with reference to the drawings in which:

FIG. 1 is a block diagram showing an outline of the structure of a CD player to which an embodiment of the present invention is applied;

FIG. 2 is a circuit diagram showing an example of a digital filter forming a signal processing device according to an embodiment of the present invention; and

FIG. 3A to FIG. 3C are illustrations of the bit length of the output of a non-cyclic digital filter.

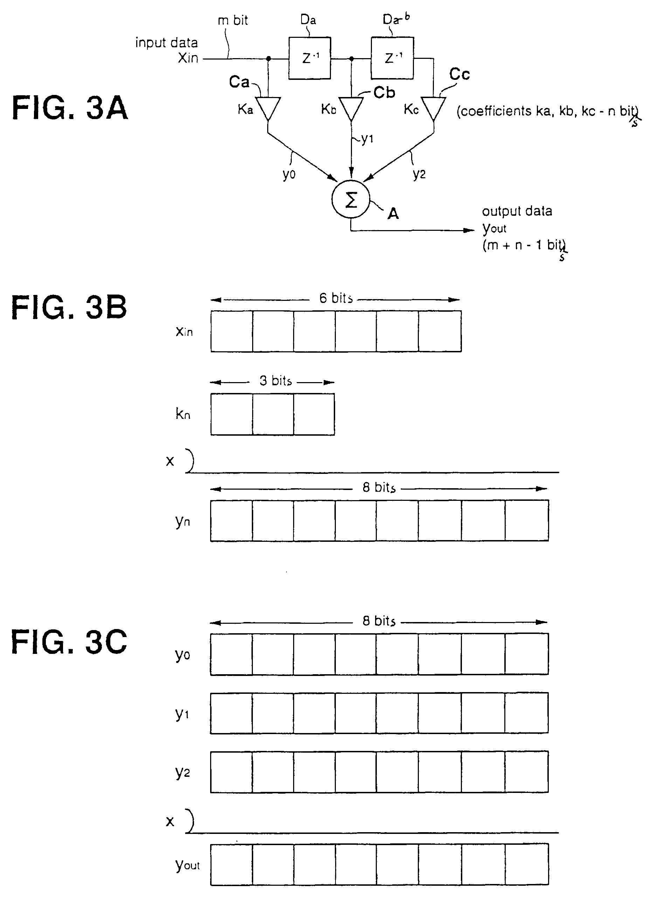

First, the relationship between the bit length of data inputted to the digital filter and the bit length of data outputted by the digital filter will be described with reference to FIG. 3A, FIG. 3B and FIG. 3C.

FIG. 3A shows a general non-cyclic digital filter, which in this case is a secondary digital filter comprising two delay circuit stages $D_a$ and $D_b$, coefficient units $C_a$, $C_b$ and $C_c$ and an adder A. Further, the signals and the coefficients are in two (2)'s complement form and determined according to a positional representation system such that the maximum negative coefficient value thereof becomes -1.

For example, if the bit length m of the input data $x_{IN}$ inputted to the digital filter shown in FIG. 3A is taken to be m bits and the bit lengths of the coefficients $k_a$, $k_b$ and $k_c$ for the coefficient units $C_a$, $C_b$ and $C_c$ are set to each be n bits, the effective bit length of the output data $y_{OUT}$ of the digital filter obtained by using the adder A to add the multiplication outputs $y_0$, $y_1$ and $y_2$ of each of the coefficient units $C_a$, $C_b$ and $C_c$ can be known to be $m + n - 1$. Namely, the effective bit length of the output data for the digital filter can be determined using the bit length of the data signal inputted to the digital filter and the bit length of the coefficients of the coefficient units for the digital filter.

For example, if the bit length of the input data $x_{IN}$ is taken to be 6 bits as shown in FIG. 3B and the coefficient $k_n$ (in

FIG. 3B the coefficients $k_a$, $k_b$ and $k_c$ are shown together as the coefficient $k_n$) for the coefficient units $C_a$, $C_b$ and $C_c$ is taken to be 3 bits as shown in FIG. 3B, the multiplication output $y_n$ (the multiplication outputs $y_0$, $y_1$ and $y_2$ are shown combined as $y_n$) is data having an eight-bit bit length.

In this case, this is the output data $y_{OUT}$ obtained by adding the multiplication outputs $y_0$, $y_1$ and $y_2$ for the bit lengths of each of the bits. This data has an effective bit length of 8 bits, which is the same as for the multiplication output shown in FIG. 3C because the numerical value is expanded at the lower order column by a summing operation. Namely, the bit length of the output data $y_{out}$ can be calculated to be

$$m + n - 1 = 6 + 3 - 1 = 8$$

in this case.

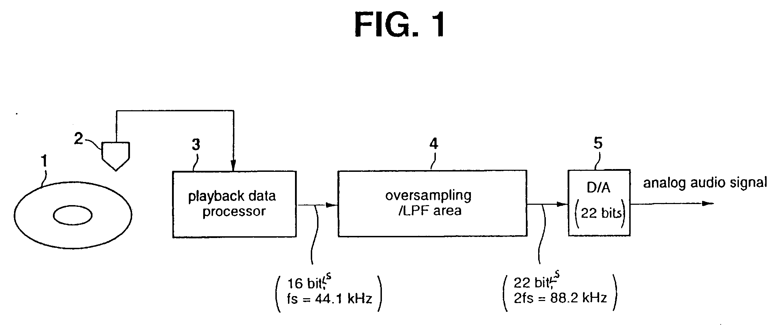

FIG. 1 is a block diagram showing the outline of the structure of a playback device equipped with a signal processing device of the embodiment. In this case, a description is given with the signal processing device of the embodiment applied to a CD player taken as a playback device.

In FIG. 1, a disc 1 is rotatably driven by a spindle motor (not shown), with recording data being read out by a pickup 2. Necessary processing such as EFM decoding and error correction are performed on data read out from the disc 1 at a data playback processor 3, with the signal then being provided to an oversampling/LPF (low pass filtering) area 4.

In this embodiment, a bit length of 16 bits is adopted for the digital audio signal outputted from the playback data processor 3 based on a CD format, with this being compatible with a sampling frequency of fs = 44.1 kHz.

The oversampling/LPF area 4 is constructed, for example, from a non-cyclic digital filter. First, oversampling is performed on the inputted digital audio signal, cyclic frequency components are removed from the digital audio signal by the low-pass filtering operation and a process for extracting source signal components of 20 kHz or less based on the CD format is carried out.

As is well known, oversampling means that when a digital audio signal is played back, the width between the lower limit of the cyclic frequency component and the upper limit of the baseband frequency component is expanded by multiplying the sampling frequency of the original digital audio signal by a prescribed number of times.

It is therefore possible to extract the source signal component in an effective manner using a low-pass filter of comparatively few stages having a flat group delay characteristic with regards to the base band component and a smooth stopping characteristic while the cyclic frequency component is removed from the digital audio signal by a low pass filter at, for example, the following stage.

In this embodiment, two-times oversampling is carried out. In this case, the upper band limit for the source signal is 20 kHz. The cyclic frequency component band therefore becomes 88.2 kHz ± 20 kHz and the lower limit becomes 68.2 kHz, so that in reality a band of 68.2 - 20 = 48.2 kHz is obtained.

A source signal band of 20 kHz or less is adopted for the digital audio signal outputted from the oversampling/LPF area 4 and the sampling frequency can therefore be pulled-up to 2fs = 88.2 kHz. Further, this output has an effective bit length of 22 bits based on the bit length of the coefficient unit set up at the oversampling/LPF area 4.

The D/A converter 5 converts the digital audio signal outputted from the oversampling/LPF area 4 into an analog audio signal and outputs this signal taking the processing bit number as 22 bits. The conversion speed of the D/A converter 5 corresponds to a sampling frequency of 88.2 kHz.

When a 22 bit D/A converter is used in this embodiment, the effective bit length of the digital audio signal outputted from the oversampling/LPF area 4 is made to be 22 bits or less. Namely, the effective bit length of the signal inputted to the D/A converter 5 from the oversampling/LPF area 4 is made to not exceed the processing bit number of the D/A converter 5.

The kind of "rounding-off" processes necessary in, for example, the related art when the bit length of audio data outputted from a digital filter for removing cyclic frequency components exceeded the processing bit length of the D/A converter for the following stage are no longer necessary and quantization errors do not occur. Deterioration in the analog audio signal outputted from the D/A converter 5 in this embodiment due to these quantization errors therefore can be prevented and the audio quality of the played-back audio signal can be improved accordingly.

As described in FIG. 3A to FIG. 3C, the effective bit length of the output of the digital filter is determined by the bit length of the inputted data and the coefficient bit length of the coefficient unit for the digital filter. However, in the case of this embodiment, the bit length of the signal inputted to the oversampling/LPF area 4 is fixed at 16 bits in accordance with the CD format. The bit length of the output of the oversampling/LPF area 4 is therefore determined by the coefficient of the coefficient unit for the oversampling/LPF area 4.

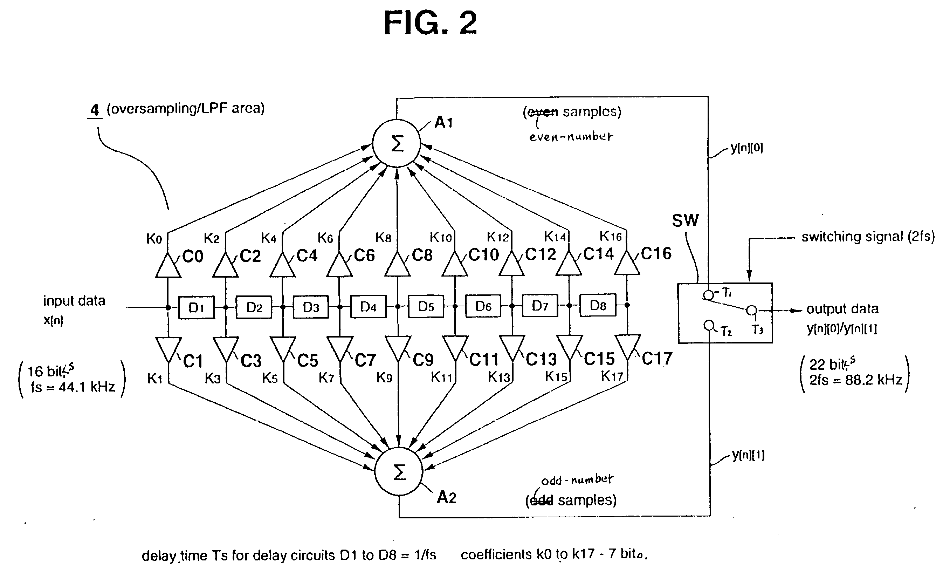

An example of the detailed configuration of the oversampling/LPF area 4 of the embodiment is shown in FIG. 2.

The oversampling/LPF area 4 shown in FIG. 2 uses the kind of non-cyclic digital filter shown in the drawings and combines the functions of an oversampling processor and a low-pass filter for removing cyclic frequency components. The digital filter shown in FIG. 2 carries out calculations using the two's complement method and is an eighth-order digital filter, as can be seen from the filter equipped with delay circuits $D_1$ to $D_8$.

The respective delay times $T_s$ for these delay circuits $D_1$ to $D_8$ are set by Ts = 1/fs (=1/44.1 kHz), as shown at the lower part of FIG. 2.

Further, eighteen coefficient units $C_0$ to $C_{17}$ are provided at the oversampling/LPF area 4 of the instant embodiment and for these units, there are set up coefficients of $K_0$ to $K_{17}$, respectively. These coefficients $K_0$ to $K_{17}$ are determined according to a positional representation system such that the maximum negative value thereof is -1 and they are set up to appropriate values, respectively, so as to obtain such characteristics of a low pass filter that can extract only a source signal component of 20kHz or less and can remove cyclic frequency components.

The eight even-numbered coefficient units $C_0$, $C_2$, $C_4$, $C_6$, $C_8$, $C_{10}$, $C_{12}$, $C_{14}$ and $C_{16}$ of the coefficient units $C_0$ to $C_{17}$ are provided in such a manner as to multiply the input data x [n] with the delay outputs of the delay circuits $D_1$ to $D_8$ and then provide these multiplication outputs to an adder $A_1$. The eight odd-numbered coefficients $C_1$, $C_3$, $C_5$, $C_7$, $C_9$, $C_{11}$, $C_{13}$, $C_{15}$ and $C_{17}$ multiply the respective input data x[n] and the delay outputs of the delay circuits $D_1$ to $D_8$, and provide these multiplication outputs to an adder $A_2$.

In this embodiment, the input data x(n) shown in FIG. 2 is a digital audio signal outputted from the playback data processor 3, as described using FIG. 1, has a bit length of six bits, and has a sampling frequency of fs = 44.1 kHz. This input data x(n) is provided to the delay circuits $D_1$ to $D_8$ and multiplied with seven bit coefficients $k_0$ to $k_{17}$ at the coefficient units $C_0$ to $C_{17}$. In this way, as described in FIG. 3A to FIG. 3C, the multiplication outputs of each of the coefficient units $C_0$ to $C_{17}$ can be expressed as:

$$m + n - 1 = 16 + 7 - 1 = 22$$

(m: input data bit length, n: bit lengths of coefficients of coefficient units)
and is taken as two's complement 22-bit data.

The multiplication outputs of the 22-bit coefficient units $C_0$ to $C_{17}$ are provided to the adders $A_1$ and $A_2$ and added, as described above, with an addition output y[n] [0] for adder $A_1$ and an addition output y[n] [1] for the adder $A_2$ being obtained. These addition outputs y[n] [0] and y[n] [1] are the 22 bit data summing operation and are therefore made to have a bit length of 22 bits, as described in FIG. 3. Further, the cyclic frequency component is removed and the source signal is extracted from these addition outputs y[n] [0] and y[n] [1] and taken as data corresponding to a digital audio signal.

The addition outputs y[n] [0] and y[n] [1] can be expressed by:

$$y[n][0] = k_0 \cdot x[n] + k_2 \cdot x[n-1] + k_4 \cdot x[n-2] + k_6 \cdot x[n-3] + \ldots + k_{16} \cdot x[n-8]$$

$$y[n][1] = k_1 \cdot x[n] + k_3 \cdot x[n-1] + k_5 \cdot x[n-2] + k_7 \cdot x[n-3] + \ldots + k_{17} \cdot x[n-8].$$

The addition outputs y[n] [0], y[n] [1] are supplied to terminals $T_1$ and $T_2$ of the switch SW, respectively.

At the switch SW, a terminal $T_3$ can be alternately switched-over between terminal $T_1$ and terminal $T_2$. Terminal $T_3$ is the output of the oversampling/LPF area 4 and is connected to the input of the D/A converter shown in FIG. 1.

Switching over of the switch SW is controlled by selecting the side of the terminal $T_1$ on even-numbered sample times and selecting the terminal $T_2$ on odd sampling times on the period of the frequency 2fs (= 88.2 kHz) using an externally provided switching signal.

The addition output y[n] [0], y[n] [1] is then obtained as the output data provided from the terminal $T_3$ of the switch SW using the period of the frequency 2fs = 88.2 kHz.

Two-times oversampling is carried out on input data x[n] sampled at a sampling frequency of 44.1 kHz of a bit length of 16 bits at the oversampling/LPF area 4 of the embodiment and a sampling frequency of 2fs = 88.2 kHz, equivalent to twice the original sampling frequency, is adopted. The cyclic frequency component can be removed, the source signal can be extracted and 22-bit data can be obtained by using this low-pass filter.

Data of a sampling frequency of 88.2 kHz with the 22-bit source signal extracted is provided to the D/A converter 5 as a digital audio signal. In this way, an audio signal having no re-quantization errors is possible.

In this embodiment, the bit lengths of the coefficients $k_0$ to $k_{17}$ for the coefficient units $C_0$ to $C_{17}$ are respectively taken as seven bits. However, it is sufficient if only the bit length of the data output of the oversampling/LPF 4 does not exceed the processing bit length of the following D/A converter 5 as a natural consequence and therefore, if, in the case of this embodiment, the cyclic frequency component can be removed in an appropriate manner, the coefficient bit-length can be set to be smaller than 7 bits.

Further, in the above embodiment, the digital filter circuit block before the D/A converter 5 is an oversampling/LPF area 4 combining the function of a low pass filter for removing the cyclic frequency component and the function of oversampling. However, it is also possible to apply the present invention in such a manner that this circuit block is simply a digital filter functioning as a low-pass filter for removing cyclic frequency components. Quantization errors will then not occur providing that the bit length of the output of the digital filter does not exceed the processing bit length of the following D/A converter, in the same way as for the above embodiment.

Moreover, the present invention is by no means limited to applications with the digital audio equipment such as the CD players or DATs etc. shown in the above embodiments and can also be applied to signal processing devices used in the playing-back of various kinds of digital data.

As described above, the signal processing device of the present invention is constructed in such a manner that the bit length of the digital filter removing the cyclic frequency component of the playback data and extracting the source signal component does not exceed the processing bit length of the D/A converter connected to the following stage. It is therefore possible to eliminate re-quantization errors and improve the audio quality of played-back audio when the present invention is applied to digital audio equipment.

**Claims**

1. A signal processing device comprising:

   digital filter means (4) which includes a plurality of coefficient units (Cn) and which makes an inputted digital signal pass through a prescribed frequency band; and

   digital/analog converting means (5) for converting an output of said digital filter means (4) to an analog signal,

   wherein the effective output bit length of said digital filter means (4) is set up to be equal to, or less than, the processing bit length of said digital/analog converting means (5).

2. A signal processing device according to claim 1, wherein when the input bit length of said digital filter means (4) is m and the coefficient bit length of each of said coefficient units (Cn) is n, the effective output bit length of said digital filter means (4) is expressed by $m + n - 1$.

3. A signal processing device according to claim 2, wherein the input bit length of said digital filter means (4) and the coefficient bit length of each of said coefficient units (Cn) are selected to be m = 16 and n = 7, respectively.

4. A signal processing device according to any one of the preceding claims, wherein said digital filter means (4) is provided with sampling frequency converting means for multiplying the sampling frequency of said inputted digital signal by a predetermined number of times.

5. A signal processing device according to claim 4, wherein the number of times by which the sampling frequency of said inputted digital signal is multiplied is selected to be two.

6. A signal processing device according to either one of claims 4 or 5, wherein said digital filter means (4) comprises:

   sampling frequency converting means for converting the sampling frequency of said inputted digital signal by multiplying it by a predetermined number of times; and

   a low-pass filter for removing a cyclic frequency component from said inputted digital signal.

7. A signal processing device according to claim 6, wherein said sampling frequency converting means for converting the sampling frequency of said inputted digital signal by multiplying said sampling frequency by a prescribed number of times and said low-pass filter for removing the cyclic frequency component are constructed by a non-cyclic digital filter (4).

## FIG. 1

Figure 1: Block diagram showing disc (1), pickup (2), playback data processor (3) outputting 16 bit, fs = 44.1 kHz, oversampling/LPF area (4) outputting 22 bit, 2fs = 88.2 kHz, and D/A (22 bits) (5) outputting analog audio signal.

# FIG. 2

**4** (oversampling/LPF area)

A1

(even samples) *even-number*

y[n][0]

SW — switching signal (2fs)

K0 C0  K2 C2  K4 C4  K6 C6  K8 C8  K10 C10  K12 C12  K14 C14  K16 C16

input data x[n]

D1  D2  D3  D4  D5  D6  D7  D8

$\left(\begin{array}{l}16\ bit,s \\ fs = 44.1\ kHz\end{array}\right)$

C1 K1  C3 K3  C5 K5  C7 K7  C9 K9  C11 K11  C13 K13  C15 K15  C17 K17

T1  T2  T3

output data y[n][0]/y[n][1]

$\left(\begin{array}{l}22\ bit,s \\ 2fs = 88.2\ kHz\end{array}\right)$

A2

*odd-number* (odd samples)

y[n][1]

delay time Ts for delay circuits D1 to D8 = 1/fs     coefficients k0 to k17 - 7 bits.

EP 0 753 849 A2

## FIG. 3A

input data
Xin

m bit

Da

$Z^{-1}$

Da-b

$Z^{-1}$

Ca

Cb

Cc

Ka

Kb

Kc

(coefficients ka, kb, kc - n bit)

y0

y1

y2

$\Sigma$

A

output data
Yout
(m + n - 1 bit)

## FIG. 3B

Xin — 6 bits

kn — 3 bits

x

yn — 8 bits

## FIG. 3C

y0 — 8 bits

y1

y2

x

Yout